(19) Europäisches Patentamt
European Patent Office
Office européen des brevets

(11) **EP 3 319 793 B1**

(12) **FASCICULE DE BREVET EUROPEEN**

(45) Date de publication et mention de la délivrance du brevet:
**26.06.2019 Bulletin 2019/26**

(21) Numéro de dépôt: **16744516.2**

(22) Date de dépôt: **07.07.2016**

(51) Int Cl.:
**B32B 15/08** *(2006.01)*    **B32B 33/00** *(2006.01)*

(86) Numéro de dépôt international:
**PCT/IB2016/000972**

(87) Numéro de publication internationale:
**WO 2017/006174 (12.01.2017 Gazette 2017/02)**

(54) **PROCÉDÉ DE FABRICATION D'UNE STRUCTURE SANDWICH**

VERFAHREN ZUR HERSTELLUNG EINER SANDWICHSTRUKTUR

METHOD FOR PRODUCING A SANDWICH STRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **07.07.2015 PCT/IB2015/001135**

(43) Date de publication de la demande:
**16.05.2018 Bulletin 2018/20**

(73) Titulaire: **ArcelorMittal**
**1160 Luxembourg (LU)**

(72) Inventeur: **JACQUET, Denis**
**60300 Chamant (FR)**

(74) Mandataire: **Lavoix**
**2, place d'Estienne d'Orves**
**75441 Paris Cedex 09 (FR)**

(56) Documents cités:
**EP-A1- 2 570 258    WO-A1-2013/156166**

## Description

La présente invention concerne des structures sandwich comprenant une couche polymérique entre deux parements en acier et leur procédé de fabrication.

La réduction de la consommation énergétique des véhicules automobiles passe notamment par la réduction du poids de ces véhicules.

L'acier traditionnellement utilisé pour la réalisation tant des pièces de peau que des pièces de structure se retrouvent en compétition avec des métaux plus légers tels que l'aluminium et avec des composites, tels que les polymères renforcés de fibres de verre ou de fibres de carbone.

Les structures sandwich peuvent présenter une alternative mais leur complexité rend difficile leur dimensionnement. Une telle structure sandwich est décrite dans le document EP 2 570 258 A1. Ce document est cependant silencieux quant à un dimensionnement dudit sandwich en fonction d'une cible monolithique à atteindre.

Ainsi, la présente invention a pour but de proposer un procédé de fabrication d'une structure sandwich facilitant le dimensionnement de la structure sandwich en fonction d'une cible à atteindre.

A cet effet, l'invention a pour premier objet un procédé de fabrication d'une structure sandwich comprenant deux parements en acier séparés par une couche polymérique comprenant les étapes selon lesquelles :

- on dimensionne la structure sandwich en fonction d'une cible à atteindre en suivant les sous-étapes selon lesquelles :

  ∘ on définit la cible à atteindre par trois valeurs-cibles, à savoir sa rigidité en traction $T_c$ exprimée en kN/mm, sa rigidité en flexion $B_c$ exprimée en kN/mm et sa masse surfacique $M_c$ exprimée en Kg/m$^2$,
  ∘ on définit une tolérance dans l'atteinte des valeurs-cibles,
  ∘ on définit la structure sandwich par cinq variables, à savoir l'épaisseur $E_a$ des parements en acier exprimée en mm, l'épaisseur $E_p$ de la couche polymérique exprimée en mm, le module d'Young intrinsèque $Y_p$ de la couche polymérique, la densité intrinsèque $d_p$ de la couche polymérique et le taux volumique $R_p$ de la couche polymérique exprimé en pourcentage volumique de la couche polymérique présentant de la matière,
  ∘ on identifie les combinaisons $E_a$, $E_p$, $Y_p$, $d_p$ et $R_p$ permettant d'atteindre les valeurs-cibles avec la tolérance définie,
  ∘ on en déduit, pour chaque variable, un domaine de fonctionnement,

- on sélectionne l'acier et la couche polymérique pour lesquels chaque variable se trouve dans le domaine défini à l'étape précédente,
- on fabrique la structure sandwich correspondante.

Le procédé selon l'invention peut également comprendre les caractéristiques optionnelles suivantes, prises isolément ou en combinaison :

- la cible à atteindre est un matériau métallique monolithique autre que l'acier,
- la cible à atteindre est de l'aluminium,
- la cible à atteindre est de l'aluminium d'épaisseur égale à 0,9mm,
- la cible à atteindre est de l'aluminium d'épaisseur égale à 0,8mm,
- la tolérance dans l'atteinte des valeurs-cibles est de 10%,
- l'étape d'identification des combinaisons $E_a$, $E_p$, $Y_p$, $d_p$ et $R_p$ permettant d'atteindre les valeurs-cibles avec la tolérance définie comprend une étape au cours de laquelle on génère des combinaisons $E_a$, $E_p$, $Y_p$, $d_p$ et $R_p$,
- il comprend une étape d'analyse graphique des combinaisons $E_a$, $E_p$, $Y_p$, $d_p$ et $R_p$ générées,

L'invention a pour second objet une structure sandwich pouvant être obtenue par le procédé selon l'invention mis en oeuvre pour une cible aluminium 0,9mm avec $T_c$=31,5N/mm, $B_c$=10,2N/mm, $M_c$=2,43Kg/m$^2$ et une tolérance de 10%, la structure sandwich comprenant :

- Deux parements en acier d'épaisseur $E_a$ d'acier comprise entre 0,133 et 0,165mm,
- Une couche polymérique intercalée entre les deux parements et présentant :

  ∘ Une épaisseur $E_p$ comprise entre (-2,5x$E_a$+0,713) et (-2,5x$E_a$+0,88),
  ∘ Une densité $d_p$ comprise entre 0,9 et 1,4,
  ∘ Un taux volumique $R_p$ supérieur ou égal à 0,2 et strictement inférieur à 1,
  ∘ Un module d'Young $Y_p$ inférieur à 4000MPa,
  ∘ Le taux volumique $R_p$ et le module d'Young $Y_p$ satisfaisant l'inéquation :

$$Y_p*(0.49*R_p^2+0.23*R_p+1/(Y_p*(1-R_p))) \geq 50 \text{ MPa}$$

Cette structure sandwich selon l'invention peut également comprendre les caractéristiques optionnelles suivantes, prises isolément ou en combinaison :

- l'épaisseur $E_a$ d'acier est comprise entre 0,141 et 0,158mm et l'épaisseur $E_p$ de couche polymérique est comprise entre $(-2,5xE_a+0,73)$ et $(-2,5xE_a+0,87)$,
- la couche polymérique comprend le mélange d'un polyamide et d'un copolymère d'éthylène et d'acide carboxylique insaturé et/ou de son dérivé.

L'invention a pour troisième objet une structure sandwich pouvant être obtenue par le procédé selon l'une quelconque des revendications 1 à 9 mis en oeuvre pour une cible aluminium 0,8mm avec $T_c$=28,0N/mm, $B_c$=7,2N/mm, $M_c$=2,16Kg/m$^2$ et une tolérance de 10%, la structure sandwich comprenant :

- Deux parements en acier d'épaisseur $E_a$ d'acier comprise entre 0,118 et 0,146mm,
- Une couche polymérique intercalée entre les deux parements et présentant :

    ◦ Une épaisseur $E_p$ comprise entre $(-2,5xE_a+0,632)$ et $(-2,5xE_a+0,75)$,
    ◦ Une densité $d_p$ comprise entre 0,9 et 1,4,
    ◦ Un taux volumique $R_p$ supérieur ou égal à 0,2 et strictement inférieur à 1,
    ◦ Un module d'Young $Y_p$ inférieur à 4000MPa,
    ◦ Le taux volumique $R_p$ et le module d'Young $Y_p$ satisfaisant l'inéquation :

$$Y_p*(0.49*R_p^2+0.23*R_p+1/(Y_p*(1-R_p))) \geq 50 \text{ MPa}$$

Cette structure sandwich selon l'invention peut également comprendre les caractéristiques optionnelles suivantes, prises isolément ou en combinaison :

- l'épaisseur $E_a$ d'acier est comprise entre 0,126 et 0,140mm et l'épaisseur $E_p$ de couche polymérique est comprise entre $(-2,5xE_a+0,646)$ et $(-2,5xE_a+0,728)$,
- le mélange d'un polyamide et d'un copolymère d'éthylène et d'acide carboxylique insaturé et/ou de son dérivé.

D'autres caractéristiques et avantages de l'invention apparaitront à la lecture de la description qui va suivre.
Le dimensionnement d'une structure sandwich passe tout d'abord par le choix d'une cible à atteindre. Cette cible peut consister indifféremment en une cible virtuelle uniquement définie par des valeurs-cibles ou en un produit concurrent dont on cherche à reproduire les performances. Dans ce second cas, la cible présente pour valeurs-cibles celles du matériau concurrent ciblé.
En particulier, la cible à atteindre est définie par trois valeurs-cibles, à savoir sa rigidité en traction $T_c$ exprimée en kN/mm, sa rigidité en flexion $B_c$ exprimée en kN/mm et sa masse surfacique $M_c$ exprimée en Kg/m$^2$.
A titre d'exemples non limitatif, dans le cas de l'aluminium en tant que cible, les valeurs-cibles $T_c$, $B_c$ et $M_c$ peuvent avoir respectivement les valeurs suivantes :

- 31,5N/mm, 10,2N/mm, 2,43Kg/m$^2$ pour de l'aluminium 0,9mm
- 28,0N/mm, 7,2N/mm, 2,16Kg/m$^2$ pour de l'aluminium 0,8mm

Dans le cadre du dimensionnement de la structure sandwich, une tolérance dans l'atteinte des valeurs-cibles est permise. Cette tolérance peut être ajustée au cas par cas par l'homme du métier en fonction de la criticité de la valeur-cible dans le contexte donné.
Une première approche peut consister par exemple à accepter que les valeurs-cibles soient atteintes à plus ou moins 10%, ou préférentiellement à plus ou moins 5%.
La structure sandwich est ensuite définie par l'épaisseur $E_a$ des parements en acier exprimée en mm, l'épaisseur $E_p$ de la couche polymérique exprimée en mm, le module d'Young intrinsèque $Y_p$ de la couche polymérique, la densité intrinsèque $d_p$ de la couche polymérique exprimé en MPa et le taux volumique $R_p$ de la couche polymérique exprimé en pourcentage volumique de la couche polymérique présentant de la matière.
On entend par module d'Young intrinsèque de la couche polymérique, le module d'Young du polymère ou du mélange de polymère constitutifs de la couche polymérique, le moussage éventuel de la couche polymérique étant exclu.

On entend par densité intrinsèque de la couche polymérique, la densité du polymère ou du mélange de polymère constitutifs de la couche polymérique, les charges éventuelles et le moussage éventuel étant exclus du calcul de la densité.

Le taux volumique $R_p$ est fonction du moussage éventuel de la couche polymérique. En cas d'absence de moussage, le taux volumique est donc de 1. Le contrôle du taux volumique passe par le contrôle du taux de moussage. De préférence, la couche polymérique est moussée, autrement dit $R_p$ est strictement inférieur à 1. Le moussage offre un meilleur compromis réduction de poids / performances mécaniques à la structure sandwich.

L'étape suivante consiste à identifier les combinaisons $E_a$, $E_p$, $Y_p$, $d_p$ et $R_p$ permettant d'atteindre les valeurs-cibles avec la tolérance définie.

Cette étape peut être mise en oeuvre selon toutes les méthodes connues de l'homme du métier.

A titre d'exemple non limitatif, on décrit ci-dessous une méthode possible. La première étape de cette méthode consiste à générer des combinaisons $E_a$, $E_p$, $Y_p$, $d_p$ et $R_p$ de la façon suivante :

- On fixe le module d'Young $Y_{a1}$ du premier parement acier à 210000 MPa,
- On fixe la taille du premier parement métallique à une largeur $l_{a1}$ de 50mm et une longueur $L_{a1}$ de 100mm,
- On fixe le coefficient de Poisson $v_{a1}$ du premier parement acier à 0,3,
- On fixe la taille de la couche polymérique à une largeur $l_p$ de 50mm et une longueur $L_p$ de 100mm,
- On fixe le coefficient de Poisson $v_p$ de la couche polymérique à 0,3,
- On fixe l'épaisseur $E_{a2}$ du second parement acier à celle du premier parement,
- On fixe le module d'Young $Y_{a2}$ du second parement acier à 210000 MPa,
- On fixe la taille du second parement acier à une largeur $l_{a2}$ de 50mm et une longueur $L_{a2}$ de 100mm,
- On fixe le coefficient de Poisson $v_{a2}$ du second parement acier à 0,3,
- On fait varier l'épaisseur $E_{a1}$ du premier parement acier de façon aléatoire, de préférence entre 0,1 et 0,2mm pour limiter le nombre d'itérations,
- On fait varier l'épaisseur $E_p$ de la couche polymérique de façon aléatoire, de préférence entre 0 et 1mm pour limiter le nombre d'itérations,
- On fait varier le module d'Young intrinsèque $Y_p$ de la couche polymérique de façon aléatoire,
- On fait varier le taux volumique $R_p$ de la couche polymérique de façon aléatoire,
- On fait varier la densité intrinsèque $d_p$ de la couche polymérique de façon aléatoire,
- On calcule le moment quadratique d'inertie $MM4_{a1}$ du premier parement acier par la relation $MM4_{a1} = l_a * E_{a1}{}^\wedge 3/12$,
- On calcule le module de cisaillement $Gc_{a1}$ du premier parement acier par la relation $GC_{a1} = Y_{a1}/(2*(1+V_{a1}))$,
- On calcule la fibre neutre $NF_{a1}$ du premier parement par la relation

$$Gc_{a1} = E_{a1}/2,$$

- On calcule la masse $M_{a1}$ du premier parement acier par la relation

$$M_{a1} = E_{a1} * 7,8,$$

- On calcule le module d'Young apparent $Yapp_p$ de la couche polymérique par la relation $Yapp_p = Y_p*(0,7^\wedge 2*R_p{}^\wedge 2+(1-0,77)*R_p+1/(Y_p*(1-R_p)))$
- On calcule le moment quadratique d'inertie $MM4_p$ de la couche polymérique par la relation $MM4_p = l_p*E_p{}^\wedge 3/12$,
- On calcule le module de cisaillement $Gc_p$ de la couche polymérique par la relation $Gc_p = Yapp_p/(2*(1+v_p))$,
- On calcule la fibre neutre $NF_p$ de la couche polymérique par la relation

$$NF_p = E_p/2 + E_{a1},$$

- On calcule la masse $M_p$ de la couche polymérique par la relation

$$M_p = R_p * E_p * d_p,$$

- On calcule le moment quadratique d'inertie $MM4_{a2}$ du second parement acier par la relation $MM4_{a2} = l_{a2}*E_{a2}{}^\wedge 3/12$,

- On calcule le module de cisaillement $Gc_{a2}$ du second parement acier par la relation $Gc_{a2}= Y_{a2}/(2*(1+v_{a2}))$,
- On calcule la fibre neutre $NF_{a2}$ du second parement par la relation

$$NF_{a2}=E_{a2}/2+E_p+E_{a1},$$

- On calcule la masse $M_{a2}$ du second parement acier par la relation

$$M_{a2}=E_{a2}*7,8,$$

- On en déduit la rigidité en flexion $B_s$ de la structure sandwich par la relation :

$$B_s= 1/(L_{a2}^3/(48*A)+L_{a2}/(4*D))$$

Dans laquelle:

$$A= \quad (Y_{a1}*MM4_{a1}+E_{a1}*Y_{a1}*I_a*(Gc_{a1}-C)^2) \quad + \quad (Yapp_p*MM4_p+E_p*$$
$$Yapp_p*I_p*(NF_p-C)^2) + (Y_{a2}*MM4_{a2}+E_{a2}* Y_{a2}*I_{a2}*(NF_{a2}-C)^2)$$

Et

$$D = I_p*Gc_p*((E_{a1}+E_{a2})/2+E_p)^2/E_p$$

Avec :

$$C=(E_{a1}*Y_{a1}*I_a*Gc_{a1}+E_p*Yapp_p*I_p*NF_p+E_{a2}*Y_{a2}*I_{a2}*NF_{a2})/(E_{a1}*Y_{a1}*I_a+E_p*Yapp_p*I_p+E_{a2}*Y_{a2}*I_{a2})$$

- On en déduit la rigidité en traction $T_s$ de la structure sandwich par la relation :

$$T_s = 50/100*(Y_{a1}*E_{a1}+Yapp_p*E_p+Y_{a2}*E_{a2})/1000$$

- On déduit la masse $M_s$ de la structure sandwich par la relation :

$$M_s = M_{a1} + M_p + M_{a2}$$

- On compare $T_s$, $B_s$ et $M_s$ aux valeurs-cibles $T_c$, $B_c$ et $M_c$ définies avec la tolérance définie.

Les résultats obtenus sont analysés de sorte à identifier les combinaisons $E_a$, $E_p$, $Y_p$, $d_p$ et $R_p$ permettant d'atteindre les valeurs-cibles avec la tolérance définie. Les résultats peuvent notamment être analysés graphiquement. A titre d'exemples, le graphique peut consister en la représentation de l'épaisseur $E_p$ de la couche polymérique en fonction de l'épaisseur $E_a$ du parement acier et du module d'Young intrinsèque $Y_p$ de la couche polymérique. Le graphique peut également consister en la représentation de l'épaisseur $E_p$ de la couche polymérique en fonction de l'épaisseur $E_a$ du parement acier et du taux volumique $R_p$ de la couche polymérique.

Au cours de l'identification des combinaisons $E_a$, $E_p$, $Y_p$, $d_p$ et $R_p$ permettant d'atteindre les valeurs-cibles avec la tolérance définie, certaines combinaisons peuvent être exclues car elles ont été identifiées comme ne fonctionnant pas.

A titre d'exemples, c'est le cas des structures sandwich présentant un module d'Young apparent de la couche polymérique inférieur à 50 Mpa. En effet, en-dessous de cette valeur, il a été constaté que l'évolution du module d'Young au cours du temps devient trop sensible à l'environnement. En particulier, l'infiltration d'eau ou l'exposition de la structure sandwich à des températures proches de la température de fusion de la couche polymérique risque d'entraîner le cisaillement de la structure sandwich et sa décohésion.

De même, il a été constaté qu'un taux volumique inférieur à 0,2, autrement dit un moussage supérieur à 80%, ne permet pas d'atteindre et/ou de conserver une rigidité suffisante de la structure sandwich.

A titre d'exemples, on déduit ainsi, pour une cible aluminium 0,9mm avec $T_c$=31,5N/mm, $B_c$=10,2N/mm, $M_c$=2,43Kg/m$^2$ et une tolérance de 10%, un domaine de fonctionnement défini par :

- Une épaisseur $E_a$ d'acier comprise entre 0,133 et 0,165mm,
- Une épaisseur $E_p$ de couche polymérique comprise entre (-2,5x$E_a$+0,713) et (-2,5x$E_a$+0,88),
- Une densité $d_p$ de la couche polymérique comprise entre 0,9 et 1,4,
- Un taux volumique $R_p$ de la couche polymérique compris entre 0,2 et 1,
- Un module d'Young $Y_p$ de la couche polymérique inférieur à 4000MPa,
- Le taux volumique $R_p$ et le module d'Young $Y_p$ satisfaisant l'inéquation :

$$Y_p*(0.49*R_p{}^2+0.23*R_p+1/(Y_p*(1-R_p))) \geq 50 \text{ MPa}$$

De même, pour une cible aluminium 0,9mm avec $T_c$=31,5N/mm, $B_c$=10,2N/mm, $M_c$=2,43Kg/m$^2$ et une tolérance de 5%, le domaine de fonctionnement est défini par :

- Une épaisseur $E_a$ d'acier comprise entre 0,141 et 0,158mm,
- Une épaisseur $E_p$ de couche polymérique comprise entre (-2,5x$E_a$+0,73) et (-2,5x$E_a$+0,87),
- Une densité $d_p$ de la couche polymérique comprise entre 0,9 et 1,4,
- Un taux volumique $R_p$ de la couche polymérique compris entre 0,2 et 1,
- Un module d'Young $Y_p$ de la couche polymérique inférieur à 4000MPa,
- Le taux volumique $R_p$ et le module d'Young $Y_p$ satisfaisant l'inéquation :

$$Y_p*(0.49*R_p{}^2+0.23*R_p+1/(Y_p*(1-R_p))) \geq 50 \text{ MPa}$$

De même, pour une cible aluminium 0,8mm avec $T_c$=28,0N/mm, $B_c$=7,2N/mm, $M_c$=2,16Kg/m$^2$ et une tolérance de 10%, le domaine de fonctionnement est défini par :

- Une épaisseur $E_a$ d'acier comprise entre 0,118 et 0,146mm,
- Une épaisseur $E_p$ de couche polymérique comprise entre (-2,5xEa+0,632) et (-2,5xEa+0,75).
- Une densité $d_p$ de la couche polymérique comprise entre 0,9 et 1,4,
- Un taux volumique $R_p$ de la couche polymérique compris entre 0,2 et 1,
- Un module d'Young $Y_p$ de la couche polymérique inférieur à 4000MPa,
- Le taux volumique $R_p$ et le module d'Young $Y_p$ satisfaisant l'inéquation :

$$Y_p*(0.49*R_p{}^2+0.23*R_p+1/(Y_p*(1-R_p))) \geq 50 \text{ MPa}$$

De même, pour une cible aluminium 0,8mm avec $T_c$=28,0N/mm, $B_c$=7,2N/mm, $M_c$=2,16Kg/m$^2$ et une tolérance de 10%, le domaine de fonctionnement est défini par :

- Une épaisseur $E_a$ d'acier comprise entre 0,126 et 0,140mm
- Une épaisseur $E_p$ de couche polymérique comprise entre (-2,5x$E_a$+0,646) et (-2,5x$E_a$+0,728).
- Une densité $d_p$ de la couche polymérique comprise entre 0,9 et 1,4,
- Un taux volumique $R_p$ de la couche polymérique compris entre 0,2 et 1,
- Un module d'Young $Y_p$ de la couche polymérique inférieur à 4000MPa,
- Le taux volumique $R_p$ et le module d'Young $Y_p$ satisfaisant l'inéquation :

$$Y_p*(0.49*R_p^2+0.23*R_p+1/(Y_p*(1-R_p))) \geq 50\ MPa$$

L'étape suivante consiste à sélectionner l'acier et la couche polymérique pour lesquels chaque variable se trouve dans le domaine défini à l'étape précédente.

L'homme du métier, qui connait les caractéristiques des aciers et des polymères, peut aisément réaliser ce choix.

Il est notamment guidé dans le choix de l'acier par les considérations ci-dessous.

De préférence, les parements sont constitués de feuilles d'acier d'épaisseur $E_a$ comprise entre 0,1 et 0,2mm. En deçà, il devient difficile d'obtenir une rigidité en flexion de la structure sandwich suffisante. Au-delà, le poids des feuilles d'acier ne permet d'obtenir une structure sandwich suffisamment légère. Plus préférentiellement les feuilles d'acier ont une épaisseur comprise entre 0,118 et 0,165mm. Plus préférentiellement encore, les feuilles d'acier ont une épaisseur comprise entre 0,126 et 0,158mm.

Le choix de la nuance d'acier est fonction de l'application visée. Dans le cas d'une utilisation dans le domaine de la construction automobile, les nuances habituellement utilisées sont notamment les nuances ES (EN DC01 à DC06) et les nuances HLE (EN H240LA à H400LA). De préférence, les aciers seront choisis parmi les nuances IF-Ti. Ces nuances présentent l'avantage d'être très peu sensibles au durcissement après cuisson (bake hardening) ce qui permet de leur faire subir sans dommage l'étape de fabrication de la structure sandwich, étape pendant laquelle la structure sandwich est portée à des températures de l'ordre de 240-250°C. Ces nuances présentent également l'avantage d'être très emboutissables.

Ces parements acier peuvent être nus. Ils peuvent alternativement être revêtus de sorte à améliorer leurs performances, en particulier leur résistance à la corrosion. Dans le cas d'un acier revêtu, l'épaisseur d'acier $E_a$ s'entend comme l'épaisseur du parement d'acier nu, sans prise en compte des épaisseurs de revêtements.

Le revêtement peut consister en un revêtement métallique obtenu par galvanisation au trempé, par électrodéposition ou encore par un procédé de dépôt sous vide, tel que le dépôt en phase vapeur ou le dépôt par jet de vapeur sonique. Ce revêtement peut comprendre un ou plusieurs métaux parmi notamment le zinc, l'aluminium, le magnésium, le silicium. A titre d'exemples non limitatifs, on peut citer le revêtement de zinc (GI), le revêtement de zinc allié (GA), l'alliage de zinc comprenant de 0,1 à 10% en poids de magnésium (ZnMg), l'alliage de zinc comprenant de 0,1 à 10% en poids de magnésium et de 0,5 à 11% en poids d'aluminium (ZnAlMg), l'alliage de zinc comprenant 5% en poids d'Aluminium (Galfan®), l'alliage de zinc comprenant 55% en poids d'Aluminium, environ 1,5% en poids de Silicium, le reste étant constitué de zinc et d'impuretés inévitables dues à l'élaboration (Aluzinc®, Galvalume®), l'alliage d'aluminium comprenant de 8 à 11% en poids de silicium et de 2 à 4% en poids de fer, le reste étant constitué d'aluminium et d'impuretés inévitables dues à l'élaboration (Alusi®), le revêtement d'aluminium (Alupur®).

Le revêtement peut également comprendre un traitement de surface ou un vernis ou une peinture ou encore une couche d'huile. Ces revêtements sont connus de l'homme du métier. Ce dernier saura les employer et les ajuster au cas par cas.

L'homme du métier est également guidé dans le choix de la couche polymérique par les considérations ci-dessous.

La couche polymérique peut être composée d'un seul polymère ou d'un mélange d'au moins deux polymères (ci-dessous mélange polymérique).

Le choix du polymère ou du mélange polymérique est principalement guidé par les conditions dans lesquelles le polymère ou le mélange polymérique va se trouver lors de la fabrication de la structure sandwich et lors de l'utilisation de celle-ci.

Ainsi, on choisira de préférence un polymère ou un mélange polymérique qui :

- présente un point de fusion ne dépassant pas 220-240°C de sorte à permettre sa mise en oeuvre sur les lignes de fabrication des structures sandwich sans recourir à un chauffage excessif,
- résiste à l'étape de cataphorèse, étape de fabrication d'un véhicule automobile au cours de laquelle une peinture appliquée sur le véhicule est cuite pendant 45 minutes environ à une température pouvant atteindre 210°C.

De préférence, la couche polymérique présente une adhérence au métal suffisante pour être utilisée sous forme d'une monocouche directement fixée sur les parements acier lors de la fabrication de la structure sandwich. A titre alternatif, la couche polymérique peut être fixée sur les parements acier par l'intermédiaire d'une colle ou adhésif disposés à l'interface couche polymérique / parement acier. A titre alternatif, la couche polymérique peut consister en un multicouche dont les couches périphériques présentent une bonne adhérence au métal.

Selon une variante de l'invention, le mélange polymérique comprend un polyamide tel que le PA6, le PA6-6, le PA11, le PA12, le PA4-6, le PA6-10, le PA6-12, dont les densités et les modules d'Young sont connus. De préférence, le mélange polymérique comprend un polyamide et un copolymère d'éthylene et d'acide carboxylique insaturé et/ou de son dérivé. Le détail des caractéristiques des composants d'un tel mélange et le procédé d'obtention de ce mélange se trouve dans la demande WO2005/142278.

Ces mélange basés sur le polyamide présentent l'avantage de résister à l'étape de cataphorèse, de présenter un bon aspect de surface après mise en forme et une bonne adhérence au métal.

Selon une variante de l'invention, le mélange polymérique est biphasique et comprend :

- Un polyamide présentant un point de fusion d'au plus égal à 210°C ;
- Une polyoléfine modifiée comportant des fonctions carboxyliques,

dont le comportement rhéologique a l'état fondu est caractérisé par l'existence d'une contrainte seuil.

Le détail des caractéristiques des composants d'un tel mélange et le procédé d'obtention de ce mélange se trouve dans la demande WO2012/076763.

Un tel mélange polymérique présente l'avantage de résister à l'étape de cataphorèse à 210°C tout en ayant une température de fusion n'excédant pas 210°C, ce qui facilite sa mise en oeuvre et donc la fabrication de la structure sandwich.

La couche polymérique peut être moussée.

La présence de bulles de gaz dans le mélange peut résulter soit de l'incorporation d'un agent d'expansion dans le mélange polymérique soit de l'introduction physique de bulles de gaz dans le mélange lors de sa mise en oeuvre.

En cas de recours à un agent d'expansion, ce dernier est de préférence incorporé dans le polymère ou le mélange polymérique lors de la fabrication de celui-ci. Lors de la fabrication du panneau sandwich, le chauffage de la couche polymérique active l'agent d'expansion qui libère du gaz dans le polymère. Le taux de moussage, et donc le taux volumique $R_p$, est alors contrôlé par la quantité d'agent d'expansion ajoutée à la couche polymérique. Parmi les agents d'expansion utilisables, on peut citer à titre d'exemple les microsphères Expancel® ajoutées à hauteur de quelques pourcents en poids de couche polymérique.

La fabrication en elle-même, autrement dit l'assemblage des parements et de la couche polymérique, pourra être réalisée selon tout procédé connu de l'homme du métier.

## Revendications

1. Procédé de fabrication d'une structure sandwich comprenant deux parements en acier séparés par une couche polymérique comprenant les étapes selon lesquelles :

   - on dimensionne la structure sandwich en fonction d'une cible à atteindre en suivant les sous-étapes selon lesquelles :

     ◦ on définit la cible à atteindre par trois valeurs-cibles, à savoir sa rigidité en traction $T_c$ exprimée en kN/mm, sa rigidité en flexion $B_c$ exprimée en kN/mm et sa masse surfacique $M_c$ exprimée en Kg/m$^2$,
     ◦ on définit une tolérance dans l'atteinte des valeurs-cibles,
     ◦ on définit la structure sandwich par cinq variables, à savoir l'épaisseur $E_a$ des parements en acier exprimée en mm, l'épaisseur $E_p$ de la couche polymérique exprimée en mm, le module d'Young intrinsèque $Y_p$ de la couche polymérique, la densité intrinsèque $d_p$ de la couche polymérique et le taux volumique $R_p$ de la couche polymérique exprimé en pourcentage volumique de la couche polymérique présentant de la matière,
     ◦ on identifie les combinaisons $E_a$, $E_p$, $Y_p$, $d_p$ et $R_p$ permettant d'atteindre les valeurs-cibles avec la tolérance définie,
     ◦ on en déduit, pour chaque variable, un domaine de fonctionnement,

   - on sélectionne l'acier et la couche polymérique pour lesquels chaque variable se trouve dans le domaine défini à l'étape précédente,
   - on fabrique la structure sandwich correspondante.

2. Procédé de fabrication selon la revendication 1 pour lequel la cible à atteindre est un matériau métallique monolithique autre que l'acier.

3. Procédé de fabrication selon la revendication 2 pour lequel la cible à atteindre est de l'aluminium.

4. Procédé de fabrication selon la revendication 3 pour lequel la cible à atteindre est de l'aluminium d'épaisseur égale à 0,9mm.

**5.** Procédé de fabrication selon la revendication 3 pour lequel la cible à atteindre est de l'aluminium d'épaisseur égale à 0,8mm.

**6.** Procédé de fabrication selon l'une quelconque des revendications précédentes pour lequel la tolérance dans l'atteinte des valeurs-cibles est de 10%.

**7.** Procédé de fabrication selon l'une quelconque des revendications précédentes pour lequel l'étape d'identification des combinaisons $E_a$, $E_p$, $Y_p$, $d_p$ et $R_p$ permettant d'atteindre les valeurs-cibles avec la tolérance définie comprend une étape au cours de laquelle on génère des combinaisons $E_a$, $E_p$, $Y_p$, $d_p$ et $R_p$.

**8.** Procédé de fabrication selon la revendication 7 comprenant une étape d'analyse graphique des combinaisons $E_a$, $E_p$, $Y_p$, $d_p$ et $R_p$ générées.

**9.** Structure sandwich pouvant être obtenue par le procédé selon l'une quelconque des revendications 1 à 8 mis en oeuvre pour une cible aluminium 0,9mm avec $T_c$=31,5N/mm, $B_c$=10,2N/mm, $M_c$=2,43Kg/m$^2$ et une tolérance de 10%, la structure sandwich comprenant :

- Deux parements en acier d'épaisseur $E_a$ d'acier comprise entre 0,133 et 0,165mm,
- Une couche polymérique intercalée entre les deux parements et présentant :

  ◦ Une épaisseur $E_p$ comprise entre $(-2,5xE_a+0,713)$ et $(-2,5xE_a+0,88)$,
  ◦ Une densité $d_p$ comprise entre 0,9 et 1,4,
  ◦ Un taux volumique $R_p$ supérieur ou égal à 0,2 et strictement inférieur à 1,
  ◦ Un module d'Young $Y_p$ inférieur à 4000MPa,
  ◦ Le taux volumique $R_p$ et le module d'Young $Y_p$ satisfaisant l'inéquation :

$$Y_p*(0.49*R_p{}^2+0.23*R_p+1/(Y_p*(1-R_p))) \geq 50 \text{ MPa}$$

**10.** Structure sandwich selon la revendication 9 pour laquelle l'épaisseur $E_a$ d'acier est comprise entre 0,141 et 0,158mm et l'épaisseur $E_p$ de couche polymérique est comprise entre $(-2,5xE_a+0,73)$ et $(-2,5xE_a+0,87)$.

**11.** Structure sandwich selon l'une quelconque des revendications 9 à 10 pour laquelle la couche polymérique comprend le mélange d'un polyamide et d'un copolymère d'éthylène et d'acide carboxylique insaturé et/ou de son dérivé.

**12.** Structure sandwich pouvant être obtenue par le procédé selon l'une quelconque des revendications 1 à 8 mis en oeuvre pour une cible aluminium 0,8mm avec $T_c$=28,0N/mm, $B_c$=7,2N/mm, $M_c$=2,16Kg/m$^2$ et une tolérance de 10%, la structure sandwich comprenant :

- Deux parements en acier d'épaisseur $E_a$ d'acier comprise entre 0,118 et 0,146mm,
- Une couche polymérique intercalée entre les deux parements et présentant :

  ◦ Une épaisseur $E_p$ comprise entre $(-2,5xE_a+0,632)$ et $(-2,5xE_a+0,75)$,
  ◦ Une densité $d_p$ comprise entre 0,9 et 1,4,
  ◦ Un taux volumique $R_p$ supérieur ou égal à 0,2 et strictement inférieur à 1,
  ◦ Un module d'Young $Y_p$ inférieur à 4000MPa,
  ◦ Le taux volumique $R_p$ et le module d'Young $Y_p$ satisfaisant l'inéquation :

$$Y_p*(0.49*R_p{}^2+0.23*R_p+1/(Y_p*(1-R_p))) \geq 50 \text{ MPa}$$

**13.** Structure sandwich selon la revendication 12 pour laquelle l'épaisseur $E_a$ d'acier est comprise entre 0,126 et 0,140mm et l'épaisseur $E_p$ de couche polymérique est comprise entre $(-2,5xE_a+0,646)$ et $(-2,5xE_a+0,728)$.

**14.** Structure sandwich selon l'une quelconque des revendications 12 à 13 pour laquelle la couche polymérique comprend le mélange d'un polyamide et d'un copolymère d'éthylène et d'acide carboxylique insaturé et/ou de son dérivé.

**Patentansprüche**

1. Verfahren zur Herstellung einer Sandwichstruktur, die zwei Deckschichten aus Stahl, die von einer Polymerschicht getrennt sind, umfasst, wobei das Verfahren die Schritte umfasst, nach denen:

   - die Sandwichstruktur abhängig von einem zu erreichenden Ziel dimensioniert wird, wobei die Unterschritte verfolgt werden, nach denen:

     ◦ das zu erreichende Ziel durch drei Zielwerte, nämlich seine Zugsteifigkeit $T_c$, ausgedrückt in kN/mm, seine Biegesteifigkeit $B_c$, ausgedrückt in kN/mm und seine flächenbezogene Masse $M_c$, ausgedrückt in kg/m$^2$, definiert wird,
     ◦ eine Toleranz hinsichtlich des Erzielens der Zielwerte definiert wird,
     ◦ die Sandwichstruktur durch fünf Variable definiert wird, nämlich die Dicke $E_a$ der Deckschichten aus Stahl, ausgedrückt in mm, die Dicke $E_p$ der Polymerschicht, ausgedrückt in mm, das intrinsische Elastizitätsmodul $Y_p$ der Polymerschicht, die intrinsische Dichte $d_p$ der Polymerschicht und den Volumenanteil $R_p$ der Polymerschicht, ausgedrückt in Volumenprozenten der Polymerschicht, die Materie aufweist,
     ◦ Kombinationen $E_a$, $E_p$, $Y_p$, $d_p$ und $R_p$ identifiziert werden, die das Erreichen der Zielwerte mit der definierten Toleranz ermöglichen,
     ◦ für jede Variable ein Betriebsbereich hergeleitet wird,

   - der Stahl und die Polymerschicht ausgewählt werden, für die jede Variable sich in dem Bereich, der in dem vorhergehenden Schritt definiert wurde, befindet,
   - die entsprechende Sandwichstruktur hergestellt wird.

2. Verfahren zur Herstellung nach Anspruch 1, für das das zu erreichende Ziel ein monolithisches Metallmaterial ist, das nicht der Stahl ist.

3. Verfahren zur Herstellung nach Anspruch 2, für das das zu erreichende Ziel Aluminium ist.

4. Verfahren zur Herstellung nach Anspruch 3, für das das zu erreichende Ziel Aluminium mit einer Dicke gleich 0,9 mm ist.

5. Verfahren zur Herstellung nach Anspruch 3, für das das zu erreichende Ziel Aluminium mit einer Dicke gleich 0,8 mm ist.

6. Verfahren zur Herstellung nach einem beliebigen der vorhergehenden Ansprüche, für das die Toleranz im Erreichen der Zielwerte 10% ist.

7. Verfahren zur Herstellung nach einem beliebigen der vorhergehenden Ansprüche, für das der Schritt der Identifikation der Kombinationen $E_a$, $E_p$, $Y_p$, $d_p$ und $R_p$, die das Erreichen der Zielwerte mit der definierten Toleranz gestatten, einen Schritt umfasst, während dem Kombinationen $E_a$, $E_p$, $Y_p$, $d_p$ und $R_p$ erzeugt werden.

8. Verfahren zur Herstellung nach Anspruch 7, einen Schritt der grafischen Analyse der erzeugten Kombinationen $E_a$, $E_p$, $Y_p$, $d_p$ und $R_p$ umfassend.

9. Sandwichstruktur, die durch das Verfahren nach einem beliebigen der Ansprüche 1 bis 8 erhalten werden kann, das für ein Ziel Aluminium 0,9 mm mit $T_c$ = 31,5 N/mm, $B_c$ = 10,2 N/mm, $M_c$ = 2,43 kg/m$^2$ und einer Toleranz von 10% umgesetzt wird, wobei die Sandwichstruktur umfasst:

   - zwei Deckschichten aus Stahl mit einer Stahldicke $E_a$ zwischen 0,133 und 0,165 mm,
   - eine zwischen den zwei Deckschichten liegende Polymerschicht, die aufweist:

     ◦ eine Dicke $E_p$ zwischen ($-2,5 \times E_a + 0,713$) und ($-2,5 \times E_a + 0,88$),
     ◦ eine Dichte $d_p$ zwischen 0,9 und 1,4,
     ◦ einen Volumenanteil $R_p$ größer oder gleich 0,2 und streng kleiner als 1,
     ◦ einen Elastizitätsmodul $Y_p$ kleiner als 4000 MPa,
     ◦ wobei der Volumenanteil $R_p$ und der Elastizitätsmodul $Y_p$ die Ungleichung erfüllen:

$$Y_p*(0{,}49*R_p^2+0{,}23*R_p+1/(Y_p*(1-R_p)))\geq 50 MPa$$

10. Sandwichstruktur nach Anspruch 9, für die die Stahldicke $E_a$ zwischen 0,141 und 0,158 mm liegt und die Dicke $E_p$ der Polymerschicht zwischen (-2,5 x $E_a$ + 0,73) und (-2,5 x $E_a$ + 0,87) liegt.

11. Sandwichstruktur nach einem beliebigen der Ansprüche 9 bis 10, für die die Polymerschicht eine Mischung aus einem Polyamid und einem Ethylencopolymer und einer ungesättigten Carbonsäure und/oder ihrem Derivat umfasst.

12. Sandwichstruktur, die durch das Verfahren nach einem beliebigen der Ansprüche 1 bis 8 erhalten wird, das für ein Ziel Aluminium 0,8 mm mit $T_c$ = 28,0 N/mm, $B_c$ = 7,2 N/mm, $M_c$ = 2,16 Kg/m$^2$ und einer Toleranz von 10% umgesetzt wird, wobei die Sandwichstruktur umfasst:

   - zwei Deckschichten aus Stahl mit einer Stahldicke $E_a$ zwischen 0,118 und 0,146 mm,
   - eine zwischen den zwei Deckschichten liegende Polymerschicht, die aufweist:

      ◦ eine Dicke $E_p$ zwischen (-2,5 x $E_a$ + 0,632) und (-2,5 x $E_a$ + 0,75),
      ◦ eine Dichte $d_p$ zwischen 0,9 und 1,4,
      ◦ einen Volumenanteil $R_p$ größer oder gleich 0,2 und streng kleiner als 1,
      ◦ einen Elastizitätsmodul $Y_p$ kleiner als 4000 MPa,
      ◦ wobei der Volumenanteil $R_p$ und der Elastizitätsmodul $Y_p$ die Ungleichung erfüllen:

$$Y_p*(0{,}49*R_p^2+0{,}23*R_p+1/(Y_p*(1-R_p)))\geq 50 MPa$$

13. Sandwichstruktur nach Anspruch 12, für die die Stahldicke $E_a$ zwischen 0,126 und 0,140 mm liegt und die Dicke $E_p$ der Polymerschicht zwischen (-2,5 x $E_a$ + 0,646) und (-2,5 x $E_a$ + 0,728) liegt.

14. Sandwichstruktur nach einem beliebigen der Ansprüche 12 bis 13, für die die Polymerschicht eine Mischung aus einem Polyamid und einem Ethylencopolymer und einer ungesättigten Carbonsäure und/oder ihrem Derivat umfasst.


**Claims**

1. Method for producing a sandwich structure comprising two steel face sheets separated by a polymer layer, comprising steps in which:

   - the sandwich structure is dimensioned according to a target to be achieved by following sub-steps in which:

      ◦ the target to be achieved is defined by three target values, namely its tensile stiffness $T_c$ expressed in kN/mm, its bending stiffness $B_c$ expressed in kN/mm and its surface density $M_c$ expressed in kg/m$^2$,
      ◦ a tolerance in the achievement of the target values is defined,
      ◦ the sandwich structure is defined by five variables, namely the thickness $E_a$ of the steel face sheets expressed in mm, the thickness $E_p$ of the polymer layer expressed in mm, the intrinsic Young's modulus $Y_p$ of the polymer layer, the intrinsic density $d_p$ of the polymer layer and the volume ratio $R_p$ of the polymer layer expressed as the volume percentage of the polymer layer having material,
      ◦ the combinations of $E_a$, $E_p$, $Y_p$, $d_p$ and $R_p$ allowing the target values to be achieved with the defined tolerance are identified,
      ◦ an operating range is derived therefrom, for each variable,

   - the steel and the polymer layer for which each variable is within the range defined in the preceding step are selected,
   - the corresponding sandwich structure is produced.

2. Production method according to claim 1, wherein the target to be achieved is a monolithic metal material other than steel.

3. Production method according to claim 2, wherein the target to be achieved is aluminium.

4. Production method according to claim 3, wherein the target to be achieved is aluminium having a thickness equal to 0.9 mm.

5. Production method according to claim 3, wherein the target to be achieved is aluminium having a thickness equal to 0.8 mm.

6. Production method according to any one of the preceding claims, wherein the tolerance in the achievement of the target values is 10%.

7. Production method according to any one of the preceding claims, wherein the step of identifying the combinations of $E_a$, $E_p$, $Y_p$, $d_p$ and $R_p$ allowing the target values to be achieved with the defined tolerance comprises a step in which combinations of $E_a$, $E_p$, $Y_p$, $d_p$ and $R_p$ are generated.

8. Production method according to claim 7, comprising a step of graphical analysis of the combinations of $E_a$, $E_p$, $Y_p$, $d_p$ and $R_p$ generated.

9. Sandwich structure obtainable by the method according to any one of claims 1 to 8 carried out for a 0.9 mm aluminium target with $T_c$ = 31.5 N/mm, $B_c$ = 10.2 N/mm, $M_c$ = 2.43 kg/m$^2$ and a tolerance of 10%, the sandwich structure comprising:

- two steel face sheets with steel thickness $E_a$ between 0.133 and 0.165 mm,
- a polymer layer interposed between the two face sheets and having:

  ◦ a thickness $E_p$ between $(-2.5 \times E_a + 0.713)$ and $(-2.5 \times E_a + 0.88)$,
  ◦ a density $d_p$ between 0.9 and 1.4,
  ◦ a volume ratio $R_p$ greater than or equal to 0.2 and strictly less than 1,
  ◦ a Young's modulus $Y_p$ less than 4000 MPa,
  ◦ the volume ratio $R_p$ and the Young's modulus $Y_p$ satisfying the inequation:

$$Y_p * (0.49 * R_p^2 + 0.23 * R_p + 1/(Y_p * (1-R_p))) \geq 50 \text{ MPa.}$$

10. Sandwich structure according to claim 9, wherein the steel thickness $E_a$ is between 0.141 and 0.158 mm and the polymer layer thickness $E_p$ is between $(-2.5 \times E_a + 0.73)$ and $(-2.5 \times E_a + 0.87)$.

11. Sandwich structure according to any one of claims 9 to 10, wherein the polymer layer comprises the mixture of a polyamide and a copolymer of ethylene and unsaturated carboxylic acid and/or its derivative.

12. Sandwich structure obtainable by the method according to any one of claims 1 to 8 carried out for a 0.8 mm aluminium target with $T_c$ = 28.0 N/mm, $B_c$ = 7.2 N/mm, $M_c$ = 2.16 kg/m$^2$ and a tolerance of 10%, the sandwich structure comprising:

- two steel face sheets with steel thickness $E_a$ between 0.118 and 0.146 mm,
- a polymer layer interposed between the two face sheets and having:

  ◦ a thickness $E_p$ between $(-2.5 \times E_a + 0.632)$ and $(-2.5 \times E_a + 0.75)$,
  ◦ a density $d_p$ between 0.9 and 1.4,
  ◦ a volume ratio $R_p$ greater than or equal to 0.2 and strictly less than 1,
  ◦ a Young's modulus $Y_p$ less than 4000 MPa,
  ◦ the volume ratio $R_p$ and the Young's modulus $Y_p$ satisfying the inequation:

$$Y_p * (0.49 * R_p^2 + 0.23 * R_p + 1/(Y_p * (1-R_p))) \geq 50 \text{ MPa.}$$

13. Sandwich structure according to claim 12, wherein the steel thickness $E_a$ is between 0.126 and 0.140 mm and the

polymer layer thickness $E_p$ is between $(-2.5 \times E_a + 0.646)$ and $(-2.5 \times E_a + 0.728)$.

14. Sandwich structure according to any one of claims 12 to 13, wherein the polymer layer comprises the mixture of a polyamide and a copolymer of ethylene and unsaturated carboxylic acid and/or its derivative.

**EP 3 319 793 B1**

**RÉFÉRENCES CITÉES DANS LA DESCRIPTION**

**Documents brevets cités dans la description**

- EP 2570258 A1
- WO 20050142278 A
- WO 2012076763 A